# EUROPEAN PATENT SPECIFICATION

(11) **EP 0 711 256 B1**
(45) Date of publication and mention of the grant of the patent: **13.08.1997**
(21) Application number: 95920889.3
(22) Date of filing: 24.05.1995
(51) Int. Cl.: C03C 13/00

(54) **GLASS-FIBER COMPOSITIONS**
GLASFASERZUSAMMENSETZUNGEN
COMPOSITIONS DE FIBRES DE VERRE

(30) Priority: 28.05.1994 DE 4418727; 01.02.1995 DE 19503167
(43) Date of publication of application: 15.05.1996
(73) Proprietor: ISOVER SAINT-GOBAIN, F-92400 Courbevoie (FR)
(72) Inventor: ROUYER, Elisabeth, F-92600 Asnières (FR); DE MERINGO, Alain, F-75005 Paris (FR); HOLSTEIN, Wolfgang, D-67744 Homberg (DE); MAUGENDRE, Stéphane, F-60460 Précy-sur-Oise (FR)
(74) Representative: Kador & Partner
(86) International application number: EP9501991
(87) International publication number: WO9532925

(56) References cited:
- EP-A- 0 019 600
- EP-A- 0 412 878
- EP-A- 0 588 251
- FR-A- 2 518 081
- GLASTECHNISCHE BERICHTE, vol. 64, no. 1, January 1991 FRANKFURT DE, pages 16-28, XP 000178832 R. M. POTTER ET AL. 'Glass Fiber Dissolution in a Physiological Saline Solution'

## Description

The present invention relates to a glass-fiber composition that is biologically degradable.

The prior art describes some glass-fiber compositions which are said to be biologically degradable.

The biological degradability of glass-fiber compositions is of great importance because various studies point out that some glass fibers with very small diameters in the range of less than 3 microns may be carcinogenic, while biologically degradable glass fibers of such dimensions show no carcinogenicity.

However not only the biological degradability is of crucial importance but also the mechanical and thermal properties of the glass fibers, or the products produced therefrom, the resistance of the glass fibers and the processibility of the glass-fiber composition. For example glass fibers are used to a great extent for insulation purposes. For these applications sufficient moisture-resistance is necessary.

Also, the glass-fiber composition must permit processibility by known methods for producing glass fibers with a small diameter, for example the centrifugal technique, in particular the inner centrifugal technique (this technique is described for example in US-PS 4 203 745).

EP-A-0 019 600 describes fiber glass compositions for glass wool insulations which comprise silica, alumina, alkaline earth oxides, sodium oxide, boron oxide, zinc oxide and traces of iron oxide.

The compositions according to FR-A-2 518 081 contain silica, alumina, boron oxide, sodium- and potassium oxide, calcium oxide, zinc oxide and zirconium oxide.

The report published in "Glastechnische Berichte", vol. 64, no. 1 (1991) presents compositions which consist of SiO₂, Al₂O₃, CaO, MgO, Na₂O, B₂O₃ and other oxides as optional ingredients and their dissolution rates under conditions approximating those thought to exist in the lung.

Inorganic fibers which are degradable or biosoluble in physiological media are disclosed in EP-A-0 412 878, and EP-A-0 588 251. These fibers comprise silica, alkaline earth oxide, alkali oxide and boron oxide. The fibers according to EP-A-0 588 251 furthermore contain zirconium oxide as compulsory ingredient.

The invention is based on the problem of providing a novel glass-fiber composition that is characterized by biological degradability, has good stability or resistance to moisture and is easy to process.

The invention is based on the finding that this problem can be solved by a glass-fiber composition that comprises considerable amounts of alkali oxides and boron oxide, and contains titanium oxide, zirconium oxide, zinc oxide, manganese oxide or mixtures of two or more of these oxides.

It has turned out that such a glass-fiber composition fulfills the combination of the necessary properties, namely biological degradability, resistance to moisture and good processibility.

The object of the invention is a glass-fiber composition that is biologically degradable, characterized by the following constituents in percent by weight:

| | |
|---|---|
| SiO₂ | 50 to 60 |
| Al₂O₃ | less than 2 |
| CaO + MgO | 10 to 16 |
| Na₂O + K₂O | 14 to 19 |
| B₂O₃ | 7 to 16 |
| TiO₂ | 0 to 4 |
| ZrO₂ | 0 to 5 |
| ZnO | 0 to 5 |
| MnO | 0 to 4 |
| TiO₂, ZrO₂, ZnO, MnO | 1 to 6 |
| Fe₂O₃, SrO | 0 to 2 |
| F, Li₂O | 0 to 2 |
| P₂O₅ | 0 to 4 |

with the proviso that if the composition contains zirconium oxide it also contains 0.5 to 2 percent by weight fluorine and/or lithium oxide.

The inventive glass-fiber compositions are processible by the centrifugal technique. The obtained fibers have good resistance to moisture. Surprisingly enough, the glass-fiber compositions show biological degradability. The mean fiber diameter is preferably 10 microns or less and is in particular between 2.5 and 5 microns.

According to a preferred embodiment the inventive glass-fiber composition contains 1 to 4 percent by weight titanium oxide.

According to another preferred embodiment the composition contains 1 to 4 percent by weight manganese oxide.

According to another preferred embodiment the composition contains 1 to 4 percent by weight zinc oxide.

According to another preferred embodiment the composition contains 0.5 to 5, in particular 0.5 to 3, percent by weight zirconium oxide.

In particular it is preferred to use mixtures of the oxides zirconium oxide, zinc oxide, titanium oxide and manganese oxide, in particular mixtures of two or three of these oxides.

In further preferred embodiments zinc oxide is mixed with titanium oxide and optionally additionally zirconium oxide, whereby the constituents may each be present in amounts of 1 to 3 percent by weight.

Further preferred embodiments are mixtures of zirconium oxide with zinc oxide, titanium oxide or manganese oxide, the constituents being present in amounts of 0.5 to 4 percent by weight, in particular 0.5 to 1.5 percent by weight.

Aluminum oxide can be present in an amount of at least 0.1 percent by weight and in particular at least 0.5 percent by weight.

Phosphorus pentoxide increases biological degradability. The compositions preferably contain 0.1 to 2 percent by weight P₂O₅.

According to a further preferred embodiment the composition contains less than 2 percent by weight magnesium oxide.

The moisture-resistance of the inventive glass-fiber compositions was determined by a standard method known as the DGG method. In the DGG method 10 g finely ground glass with a grain size between about 360 and 400 microns is held at the boiling point for five hours in 100 ml water. After quick cooling of the material the solution is filtered and a certain volume of the filtrate evaporated to dryness. The weight of the thus obtained dry material permits the amount of glass dissolved in the water to be calculated. The amount is stated in milligrams per gram of tested glass.

The biological degradability of the inventive glass compositions was tested by introducing 1 g of the glass powder, as described for the DGG method, into a physiological solution with the composition stated below and a pH value of 7.4:

| | |
|---|---|
| NaCl | 6.78 |
| NH₄Cl | 0.535 |
| NaHCO₃ | 2.268 |
| NaH₂PO₄H₂O | 0.166 |
| (Na₃ citrate) 2H₂O | 0.059 |
| Glycine | 0.450 |
| H₂SO₄ | 0.049 |
| CaCl₂ | 0.022 |

Dynamic test conditions were selected as are described in Scholze and Conradt. The flow rate was 300 ml/day. The duration of the test was 14 days. The results are stated as percent of SiO₂ in the solution x 100 after 14 days.

The invention shall be described in more detail in the following with reference to examples.

### Examples

Glass with the compositions stated in Tables I and II was melted.

All glass compositions could be processed satisfactorily by the centrifugal technique.

The second last line states the values determined by the DGG method. The last line states the values of biological degradability according to the method of determination described above.

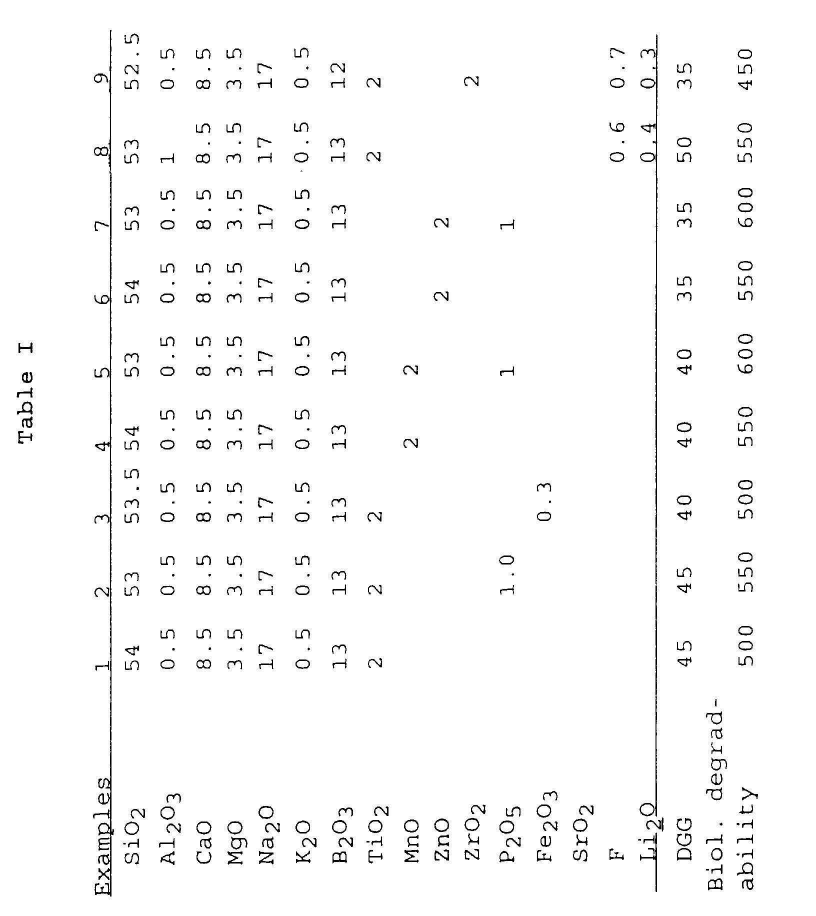

**Table II**

| Examples | 10 | 11 |
|---|---|---|
| SiO₂ | 54 | 53.9 |
| Al₂O₃ | 0.5 | 0.4 |
| CaO | 8.5 | 8.5 |
| MgO | 1.8 | 1.5 |
| Na₂O | 18.0 | 18.0 |
| K₂O | 0.7 | 0.7 |
| B₂O₃ | 13.5 | 13.0 |
| TiO₂ | 2.0 | |
| MnO | | |
| ZnO | | 3.0 |
| ZrO₂ | | |
| P₂O₅ | | |
| Fe₂O₃ | | |
| SrO₂ | | |
| F | | |
| Li₂O | | |
| Impurities | 1.0 | 1.0 |

## Claims

1. A glass-fiber composition that is biologically degradable, characterized by the following constituents in percent by weight:
| | |
|---|---|
| SiO₂ | 50 to 60 |
| Al₂O₃ | less than 2 |
| CaO + MgO | 10 to 16 |
| Na₂O + K₂O | 14 to 19 |
| B₂O₃ | 7 to 16 |
| TiO₂ | 0 to 4 |
| ZrO₂ | 0 to 5 |
| ZnO | 0 to 5 |
| MnO | 0 to 4 |
| TiO₂, ZrO₂, ZnO, MnO | 1 to 6 |
| Fe₂O₃, SrO | 0 to 2 |
| F, Li₂O | 0 to 2 |
| P₂O₅ | 0 to 4 |
with the proviso that if the composition contains zirconium oxide it also contains 0.5 to 2 % by weight fluorine and/or lithium oxide.

2. The glass-fiber composition of claim 1, characterized in that the content of titanium dioxide is 1 to 4 percent by weight.

3. The glass-fiber composition of claim 1, characterized in that the content of manganese oxide is 1 to 4 percent by weight.

4. The glass-fiber composition of claim 1, characterized in that the content of zinc oxide is 1 to 4 percent by weight.

5. The glass-fiber composition of claim 1, characterized in that the content of zirconium oxide is 0.5 to 3 percent by weight.

6. The glass-fiber composition of claim 1, characterized in that the composition contains zirconium oxide mixed with zinc oxide, titanium oxide and/or manganese oxide.

7. The glass-fiber composition of claim 1, characterized in that the composition contains less than 2 percent by weight magnesium oxide.

## Patentansprüche

1. Glasfaserzusammensetzung, die biologisch abbaubar ist, **gekennzeichnet durch** die folgenden Bestandteile in Gewichtsprozent:
| | |
|---|---|
| SiO₂ | 50 bis 60 |
| Al₂O₃ | weniger als 2 |
| CaO + MgO | 10 bis 16 |
| Na₂O + K₂O | 14 bis 19 |
| B₂O₃ | 7 bis 16 |
| TiO₂ | 0 bis 4 |
| ZrO₂ | 0 bis 5 |
| ZnO | 0 bis 5 |
| MnO | 0 bis 4 |
| TiO₂, ZrO₂, ZnO, MnO | 1 bis 6 |
| Fe₂O₃, SrO | 0 bis 2 |
| F, Li₂O | 0 bis 2 |
| P₂O₅ | 0 bis 4 |
mit der Bedingung, daß, wenn die Zusammensetzung Zirkonoxid enthält, sie ferner 0.5 bis 2 Gewichtsprozent Fluor und/oder Lithiumoxid enthält.

2. Glasfaserzusammensetzung nach Anspruch 1, **dadurch gekennzeichnet**, daß der Gehalt an Titandioxid 1 bis 4 Gewichtsprozent beträgt.

3. Glasfaserzusammensetzung nach Anspruch 1, **dadurch gekennzeichnet**, daß der Gehalt an Manganoxid 1 bis 4 Gewichtsprozent beträgt.

4. Glasfaserzusammensetzung nach Anspruch 1, **dadurch gekennzeichnet**, daß der Gehalt an Zinkoxid 1 bis 4 Gewichtsprozent beträgt.

5. Glasfaserzusammensetzung nach Anspruch 1, **dadurch gekennzeichnet**, daß der Gehalt an Zirkonoxid 0.5 bis 3 Gewichtsprozent beträgt.

6. Glasfaserzusammensetzung nach Anspruch 1, **dadurch gekennzeichnet**, daß die Zusammensetzung Zirkonoxid gemischt mit Zinkoxid, Titanoxid und/oder Manganoxid enthält.

7. Glasfaserzusammensetzung nach Anspruch 1, **dadurch gekennzeichnet**, daß die Zusammensetzung weniger als 2 Gewichtsprozent Magnesiumoxid enthält.

## Revendications

1. Composition de fibres de verre biodégradable, caractérisée par les constituants suivants en % en poids :
| | |
|---|---|
| SiO₂ | 50 à 60 |
| Al₂O₃ | inférieur à 2 |
| CaO + MgO | 10 à 16 |
| Na₂O + K₂O | 14 à 19 |
| B₂O₃ | 7 à 16 |
| TiO₂ | 0 à 4 |
| ZrO₂ | 0 à 5 |
| ZnO | 0 à 5 |
| MnO | 0 à 4 |
| TiO₂, ZrO₂, ZnO, MnO | 1 à 6 |
| Fe₂O₃, SrO | 0 à 2 |
| F, Li₂O | 0 à 2 |
| P₂O₅ | 0 à 4 |
sous réserve que lorsque la composition contient de l'oxyde de zirconium, elle contient également de 0,5 à 2 % en poids de fluor et/ou d'oxyde de lithium.

2. Composition de fibres de verre selon la revendication 1, caractérisée en ce que la teneur en dioxyde de titane est de 1 à 4 % en poids.

3. Composition de fibres de verre selon la revendication 1, caractérisée en ce que la teneur en oxyde de manganèse est de 1 à 4 % en poids.

4. Composition de fibres de verre selon la revendication 1, caractérisée en ce que la teneur en oxyde de zinc est de 1 à 4 % en poids.

5. Composition de fibres de verre selon la revendication 1, caractérisée en ce que la teneur en oxyde de zirconium est de 0,5 à 3 % en poids.

6. Composition de fibres de verre selon la revendication 1, caractérisée en ce que la composition contient de l'oxyde de zirconium mélangée à de l'oxyde de zinc, de l'oxyde de titane et/ou de l'oxyde de manganèse.

7. Composition de fibres de verre selon la revendication 1, caractérisée en ce que la composition contient moins de 2 % en poids d'oxyde de magnésium.
